# EUROPÄISCHE PATENTSCHRIFT

(11) **EP 2 209 984 B1**
(45) Veröffentlichungstag und Bekanntmachung des Hinweises auf die Patenterteilung: **03.10.2018**
(21) Anmeldenummer: 09777046.5
(22) Anmeldetag: 08.07.2009
(51) Int. Cl.: F02M 26/00

(54) **SELBSTZÜNDENDE VERBRENNUNGSKRAFTMASCHINE MIT ETHER-FUMIGATION DER VERBRENNUNGSLUFT FÜR FAHRZEUGE UND VERFAHREN ZUR ETHER-FUMIGATION DER VERBRENNUNGSLUFT IN EINER SELBSTZÜNDENDEN VERBRENNUNGSKRAFTMASCHINE FÜR FAHRZEUGE**
SELF-IGNITING INTERNAL COMBUSTION ENGINE WITH ETHER FUMIGATION OF THE COMBUSTION AIR FOR VEHICLES AND A METHOD FOR ETHER FUMIGATION OF THE COMBUSTION AIR IN A SELF-IGNITING INTERNAL COMBUSTION ENGINE FOR VEHICLES
MOTEUR À COMBUSTION INTERNE À AUTO-ALLUMAGE AVEC FUMIGATION À L'ÉTHER DE L'AIR DE COMBUSTION POUR VÉHICULES ET PROCÉDÉ DE FUMIGATION À L'ÉTHER DE L'AIR DE COMBUSTION DANS UN MOTEUR À COMBUSTION INTERNE À AUTO-ALLUMAGE POUR VÉHICULES

(30) Priorität: 09.07.2008 DE 102008032253
(43) Veröffentlichungstag der Anmeldung: 28.07.2010
(73) Patentinhaber: MAN Truck & Bus AG, 80995 München (DE)
(72) Erfinder: EBERHARD, Jacob, 82152 Krailling (DE)
(74) Vertreter: Held, Stephan
(86) Internationale Anmeldenummer: PCT/EP2009/004949
(87) Internationale Veröffentlichungsnummer: WO 2010/003664

(56) Entgegenhaltungen:
- WO-A-2005/054657
- GB-A- 2 320 056
- GB-A- 2 320 057
- US-B1- 6 508 209

## Beschreibung

Die Erfindung betrifft eine selbstzündende Verbrennungskraftmaschine mit Ether-Fumigation der Verbrennungsluft für Fahrzeuge gemäß Anspruch 1 . Weiterhin betrifft die Erfindung ein Verfahren zur Ether-Fumigation der Verbrennungsluft in einer selbstzündenden Verbrennungskraftmaschine für Fahrzeuge gemäß Anspruch 9 .

Im Rahmen der weltweiten Bemühungen zur Verringerung der Emission von Luftverunreinigungen bestehen mittlerweile in allen Industriestaaten gesetzliche Vorgaben in Form von Grenz- oder Zielwerten für die Freisetzung bestimmter Schadstoffe. Umfasst sind hiervon auch die Abgasemissionen von Dieselmotoren, insbesondere Stickoxide (NOx) und Ruß (PM - Partikel), denen aufgrund des weltweit steigenden Verkehrsaufkommens besondere Bedeutung zukommt. Es besteht somit ein Bedarf an Motoren mit leistungsfähigen Brennverfahren und Abgasnachbehandlung, die imstande sind, den steigenden Umweltschutzbemühungen und mithin zunehmend strengeren Abgasnormen, insbesondere im Hinblick auf die Freisetzung von Stickoxiden und Ruß, gerecht zu werden.

Zur Absenkung der Rußemissionen ist die Verwendung sauerstoffhaltiger Kraftstoffe als geeignetes Mittel bekannt. Motoren, die mit Methanol (Cetanzahl etwa 3), Ethanol (Cetanzahl etwa 8), n-Butanol (Cetanzahl 17) oder Dimethylether (DME, Cetanzahl etwa 55 bis 80) betrieben werden, emittieren beim Magerbetrieb praktisch keinen Ruß. Zum Betrieb moderner schnell laufender Dieselmotoren sind allerdings Cetanzahlen > 50 erforderlich, so dass Methanol, Ethanol und n-Butanol aufgrund ihrer niedrigen Cetanzahlen nicht unmittelbar in selbstzündenden Verbrennungsmotoren bzw. Dieselmotoren ersetzbar sind, sondern zusätzliche Zündhilfen erforderlich machen, wie etwa Glühkerzen oder/und Zündbeschleunigerzusätze. Während Dimethylether insoweit keiner Beschränkung unterliegt, ergeben sich allerdings Beschränkungen daraus, dass DME eine unter Druck stehende Flüssigkeit mit einem Siedepunkt von -26°C ist und daher, ähnlich einem Flüssiggaskraftstoff (LPG - liquified Petroleum gas), ein spezielles Logistiksystem benötigt, das in konventionellen Fahrzeugen mit Dieselmotoren nicht vorgesehen ist.

Eine Absenkung der Stickoxidemissionen von Dieselmotoren ist durch selektive katalytische Reduktion möglich, die seit über 30 Jahren als SCR-Methode (SCR - selective catalytic reduction) bekannt ist. Verfahrensgemäß wird dabei eine wässrige Harnstofflösung (AdBlue<®>) im Abgasstrom auf einen Katalysator zudosiert, wodurch sich in einer Hydrolysereaktion Ammoniak und Wasser bilden. Der erzeugte Ammoniak reduziert dann in einem sogenannten SCR-Katalysator, bestehend entweder aus Titandioxid, Vanadiumpentoxid und Wolframoxid oder aus Zeolithen, bei Temperaturen zwischen 200 und 600°C die im Abgas enthaltenen Stickoxide zu Stickstoff. Auf diese Weise ist zwar eine weitestgehende Entfernung der Stickoxide aus dem Abgas möglich. Allerdings beträgt der Verbrauch der wässrigen Harnstofflösung bis zu etwa 8% der für den Motorbetrieb erforderlichen Dieselkraftstoffmenge und muss insoweit stets in der entsprechenden Menge in einem zusätzlichen Tank bereitgestellt werden.

Als wirkungsvolle Alternative zur selektiven katalytischen Reduktion für die Absenkung der Stickoxidemissionen von Dieselmotoren, die mit schwefelarmen, mineralölbasierten Dieselkraftstoffen gefeuert werden, hat sich in den letzten Jahren die gekühlte Abgasrückführung (AGR) erwiesen. Hierbei wird ein Teil des Abgases über ein Steuerventil, das eine Verbindung zwischen Abgas- und Ansaugluft- bzw. Verbrennungsluftkanal ermöglicht, der gekühlten Ansaug- bzw. Verbrennungsluft zugemischt und mit dieser dem Brennraum zugeführt, wodurch eine Temperaturabsenkung bei der Dieselkraftstoffverbrennung unter das für die Stickoxidbildung notwendige Niveau ermöglicht wird. Alternativ kann diese Temperaturabsenkung durch eine unmittelbare Abgaseinleitung in den Motorbrennraum über ein Ansaugventil während des Ansaugtaktes erfolgen. Die Temperaturabsenkung durch Abgasrückführung basiert insoweit auf dem niedrigeren Brennwert des im Brennraum bereitgestellten sauerstoffreduzierten Dieselkraftstoff-Gasgemisches. Die Abgasrückführrate beträgt bei Dieselmotoren maximal 35% bei Volllast. Allerdings sind derartige Hoch-AGR-Motoren in der Herstellung teurer als Dieselmotoren ohne AGR-Einrichtung, da die hohen Abgasrückführraten mit der Erzeugung hoher Ladedrücke, z. B. durch zweistufige Aufladung mit Zwischenkühlung, und hoher Kraftstoffeinspritzdrücke von über 1800 bar verbunden sind. Bei der Verwendung von sauerstoffhaltigen Kraftstoffen kann ohne Emissionsnachteile auf höhere Ladedrücke verzichtet werden, was wiederum einen Motorbetrieb mit einer konventionellen, einstufigen Ladegruppe ermöglicht.
Beispielhaft wird im Hinblick auf den Stand der Technik bei Verbrennungskraftmaschinen mit einer Abgasrückführung auf US 2007/0215125 A und WO 2005/054657 A1 verwiesen.

Vor dem Hintergrund, dass Länder wie insbesondere China in wenigen Jahren über erhebliche Produktionskapazitäten für Methanol aus Erdgas, bei Produktionskosten von etwa 2 bis 3 EUR/GJ, und aus Kohle, bei Produktionskosten von etwa 7 EUR/GJ, verfügen werden, bei gleichzeitigem Mangel an mineralölbasierten Kraftstoffen, für die darüber hinaus Produktionskosten von etwa 16 EUR/GJ veranschlagt werden, und in Brasilien bereits heute Bioethanol bzw. Biodiesel flächendeckend zur Verfügung steht, sind die vorstehend angegebenen umweltspezifischen Anforderungen für Dieselmotoren bzw. Nutzfahrzeugmotoren gleichermaßen bei einem MO torbetrieb mit Alkanol-Kraftstoffen wie mit mineralölbasierten Diesel-Kraftstoffen relevant.

Für die Nutzung von Methanol in Dieselmotoren hat sich das Fumigationskonzept als geeignet herausgestellt. Hierbei wird ein Teil des Methanols in einem katalytischen Reaktor an Bord des Fahrzeugs in gasförmigen Dimethylether und Wasserdampf nach der Gleichung:
2CH3OH - (CH3)20 + H20 (1) umgewandelt und der Verbrennungsluft direkt zugemischt. Der katalytische Reaktor enthält Aluminiumoxid-Pellets als Katalysator. Für die Reaktion gemäß Gleichung 1 hat sich Aluminiumoxid (y-AI203) als aktivster Katalysator herausgestellt, der sich zudem durch seine hohe thermische Stabilität auszeichnet. Um z. B. genügend Dimethylethylen für die Fumigation eines 180 kW-Motors bereitstellen zu können, werden 0,7 kg des y-AI203-Katalysators benötigt. Für einen stabilen Reaktionsverlauf ist zudem eine Reaktor-Wandtemperatur von > 250°C erforderlich, die beim Kaltstart mittels eines Methanolbrenners innerhalb von 25 s zu erreichen ist. Verbrennungskraftmaschinen, die mit Methanol betrieben werden, sind beispielsweise aus US 5,097,803 A und EP 0 032 003 A1 bekannt.

Wird anstelle von Methanol als Kraftstoff Ethanol verwendet, erfolgt analog der Reaktion nach Gleichung 1 die für die Fumigation erforderliche katalytische Dehydration nach der Gleichung:
2C2H5OH - (C2H5)20 + H20 (2) zu Diethylether (Cetanzahl 150) und Wasserdampf.

Ebenso kann n-Butanol (Cetanzahl 17) zu Di-n-Butylether mit einer Cetanzahl von 100 dehydratisiert werden.

Aus der Zeitschrift Proceedings of the Institution of Mechanical Engineers, Part D: Journal of Automobile Engineering, Heft Volume 217, Number 3/2003, Seiten 155 bis 164 ist ein derartiges Verfahren zur Umsetzung von Alkoholen zu Ethern für die Fumigation in mit Methanol betriebenen Dieselmotoren bekannt. Danach wird zunächst ein kleiner Teil des als Kraftstoff verwendeten Methanols im Fahrzeug katalytisch zu Dimethylether und Wasser umgesetzt. Diese Umsetzungsprodukte werden anschließend über die Verbrennungsluft dem Motor zugeführt, um Motorleistungen und Abgasemissionen, wie sie von mit Alkohol betriebenen Dieselmotoren bei Additivierung des Kraftstoffs mit Polyethylenglykol (PEG) als Zündbeschleuniger bekannt sind, zu erzielen. Als Katalysator ist dabei Aluminiumoxid (y-AI203) in einem Festbettreaktor vorgesehen, wobei dieser zum Zwecke einer Beschleunigung der Methanol-Dehydratisierung, und insoweit zur Verbesserung seines Kaltstartverhaltens, mit den heißen Verbrennungsgasen eines zugeordneten Methanolbrenners auf bis zu 250°C aufgeheizt wird.

Der Erfindung liegt die Aufgabe zugrunde, eine selbstzündende Verbrennungskraftmaschine mit Ether-Fumigation der Verbrennungsluft für Fahrzeuge anzugeben, die, dem heutigen Stand der Technik entsprechend, mit gekühlter Abgasrückführung und bevorzugt auch mit Abgasturboaufladung ausgerüstet ist und ohne wesentliche Änderung des bei derartigen modernen Dieselmotoren üblichen Logistiksystems sowie ohne zusätzliche Zündhilfen und Zündbeschleuniger, sowohl für eine Befeuerung mit Alkanol-Kraftstoffen wie mit schwefelarmen, mineralölbasierten Dieselkraftstoffen und Alkanol-Kraftstoffen geeignet ist und eine weitestgehende Entfernung von Stickoxiden und Ruß aus dem Abgas, unter Einhaltung der einschlägigen Abgasnormen und ohne Speicheraufwand für zusätzliche, lediglich der Abgasreduzierung dienende Betriebsstoffe, ermöglicht und die zudem ohne wesentliche Mehrkosten, im Vergleich zu entsprechenden Motoren bekannter Bauart, herstellbar und betreibbar ist.

Die Aufgabe der Erfindung wird durch eine selbstzündende Verbrennungskraftmaschine mit Ether-Fumigation der Verbrennungsluft für Fahrzeuge gemäß Anspruch 1 gelöst, die erfindungsgemäß zur Durchführung eines Verfahrens zur Ether-Fumigation des rückgeführten Abgases in einer Verbrennungskraftmaschine für Fahrzeuge gemäß Anspruch 9 geeignet und die dadurch gekennzeichnet ist, dass die Verbrennungskraftmaschine zur Ether-Fumigation in Strömungsrichtung Zuführmittel für einen Alkanol-Kraftstoff, einen Abgaswärmetauscher, zur Abkühlung eines Teils des bei der Befeuerung der Verbrennungskraftmaschine entstehenden Abgases und zur Verdampfung des zugeführten Alkanol-Kraftstoffs unter Aufnahme der bei der Abkühlung des Abgases abzuführenden Wärmeenergie, und einen Katalysator, zur Dehydratisierung des verdampften Alkanol-Kraftstoffs zu Ether, umfasst, wobei die Zuführmittel, der Abgaswärmetauscher und der Katalysator in einer Weise ausgebildet und mit dem Brennraum der Verbrennungskraftmaschine verbunden sind, dass ein Teil des für die Befeuerung der Verbrennungskraftmaschine erforderlichen Kraftstoffs mittels der Ether-Fumigation der Verbrennungsluft, unter Beimischung des in dem Abgaswärmetauscher gekühlten Abgases, dem Brennraum der Verbrennungskraftmaschine zuführbar ist.

Die erfindungsgemäße Verbrennungskraftmaschine erfordert keine wesentliche Änderung des Logistiksystems und ist sowohl mit Alkanol-Kraftstoffen als auch mit schwefelarmen, mineralölbasierten Dieselkraftstoffen und Alkanol-Kraftstoffen ohne zusätzliche Zündhilfen zu betreiben.

Durch die Zufuhr der hoch cetanhaltigen Ether wird die Zündwilligkeit des Kraftstoff-Luft-Gemi sches bzw. Verbrennungsgemisches (VG) in vorteilhafter Weise erhöht, so dass auf einen Zusatz von kostenintensiven Zündbeschleunigern, die zudem häufig Nitroverbindungen enthalten, verzichtet werden kann.

Mittels der erfindungsgemäßen Ether-Fumigation ist über eine wesentlich verbesserte Homogenisierung des Kraftstoff-Luft-Gemisches im Brennraum des Motors eine weitestgehende Reduzierung der Schadstoffemissionen erzielbar, bei gleichzeitiger Leistung- bzw. Wirkungsgradsteigerung des Motors. Die erfindungsgemäße Verbrennungskraftmaschine erfüllt insoweit insbesondere auch die maßgeblichen gesetzlichen Abgasnormen, etwa die für Nutzfahrzeugmotoren geltende EU V (EU-Richtlinie 2006/51/EC) und EU VI (EU-Richtlinie erscheint 2009) für die Freisetzung von Stickoxiden und Ruß; eine analoge Gesetzgebung existiert in den USA und in Japan.

Ein weiterer Vorteil besteht darin, dass keine zusätzlichen Betriebsstoffe, die ausschließlich der Emissionsverminderung dienen, vorgehalten werden müssen.

Die, im Vergleich zu einem herkömmlichen Selbstzündungsmotor mit Abgasturboaufladung und gekühlter Abgasrückführung, nur geringfügigen baulichen Modifikationen ermöglichen eine Herstellung des erfindungsgemäßen Motors ohne wesentliche Mehrkosten. Eine Reduzierung der Betriebskosten ergibt sich allein schon aufgrund der vorgenannten Vorteile gegenüber entsprechenden Motoren bekannter Bauart. In vorteilhafter Weise trägt schließlich auch das, durch die Verwendbarkeit von mineralischen Dieselkraftstoffen und Alkanol-Kraftstoffen, wesentlich erweiterte Einsatzgebiet des Motors zu einer Erniedrigung der Betriebskosten bei.

Weitere Vorteile der erfindungsgemäßen Verbrennungskraftmaschine, bzw. des erfindungsgemäßen Verfahrens, ergeben sich unmittelbar aus den Gegenständen der abhängigen Ansprüche. Diese Gegenstände werden im Einzelnen unter Angabe der jeweiligen Vorteile nachfolgend näher erläutert:
Für die Ether-Fumigation des Verbrennungsgases kommen bevorzugt ein- oder zweiwertige Alkanole zu Anwendung, die im Fahrzeug mittels eines dafür geeigneten Kraftstofftanks üblicher Bauart bereitgestellt werden. Zum Betreiben des Motors wird der Alkanol-Kraftstoff mit wenigstens einer Kraftstoffförderpumpe, entsprechend den baulichen Gegebenheiten im Fahrzeug, von dem Kraftstofftank zunächst dem Abgaswärmetauscher über zumindest ein Einspritzventil, zum Zwecke einer möglichst gleichmäßigen Verteilung, zugeführt. Für die Verwendung in der erfindungsgemäßen Verbrennungskraftmaschine, bzw. in dem erfindungsgemäßen Verfahren, haben sich insbesondere die einwertigen Alkanole Methanol, Ethanol, n-Propanol und i-Propanol, n-Butanol und das zweiwertige Alkanol 1 ,2-Ethandiol als vorteilhaft erwiesen.

Die Dehydratisierung der einwertigen Alkanole erfolgt nach den vorstehend angegebenen Gleichungen 1 und 2 zu Dialkylethern. Die zweiwertigen Alkanole bzw. Alkandiole werden nach der Gleichung:
2HO-CH2-CH2-OH - (-CH2-CH2-0-)2+ 2H20 (3) katalytisch umgewandelt. So wird beispielsweise 1 ,2-Ethandiol zu Dioxan (Kp = 100°C) umgesetzt. Diese Ether - Dialkylether und Dioxan - werden bei der erfindungsgemäßen Ether-Fumigation bevorzugt eingesetzt.

Besonders bevorzugt ist es, einen Alkanol-Kraftstoff nicht nur über die Ether-Fumigation der Verbrennungsluft, bzw. des rückgeführten Abgases und der Verbrennungsluft, der motorischen Verbrennung zuzuführen, sondern diesen auch, wie beim Betrieb eines konventionellen Dieselmotors, aus einem Kraftstofftank, vorzugsweise aus einem gemeinsamen Kraftstofftank, über eine Kraftstoffförderpumpe, mittels Direkt-Einspritzung in den Brennraum einzubringen. Ein derartiger selbstzündender Alkanolmotor mit Abgasrückführung und Ether-Fumigation ermöglicht, ohne den Zusatz von Zündbeschleunigern, einen weitestgehend stickoxidfreien Betrieb. Ein weiterer Vorteil dieses erfindungsgemäßen Motors ist, dass nur ein Kraftstoff- bzw. Treibstofftank erforderlich ist.

Alternativ ist es bevorzugt, dass durch Direkteinspritzung in den Brennraum ein Diesel-Kraftstoff, insbesondere ein schwefelarmer, mineralölbasierter Diesel-Kraftstoff, in der vorgenannten Weise mittels Kraftstofftank, Kraftstoffförderpumpe und Direkt-Einspritzung zugeführt wird und gleichzeitig ein Alkanol-Kraftstoff durch Ether-Fumigation der Verbrennungsluft oder des rückgeführten Abgases und der Verbrennungsluft eingebracht wird, wobei jede der beiden Kraftstoffarten anteilig den Energiebedarf für den Motorbetrieb deckt. Die erfindungsgemäße Verwendbarkeit von konventionellen, leicht erhältlichen mineralischen Dieselkraftstoffen neben Alkanol-Kraftstoffen vergrößert in vorteilhafter Weise das Einsatzgebiet des Motors und führt auch zu einer Betriebskostenersparnis, insbesondere auch vor dem Hintergrund der für die nächsten Jahrzehnte prognostizierten Preisentwicklung bei Alkanolen und mineralölbasierten Dieselkraftstoffen, wonach Alkanole deutlich preiswerter als mineralölbasierte Dieselkraftstoffe erhältlich sein werden.

Im Hinblick auf eine Reduzierung von Stickoxiden und eine Verbesserung der Zündwilligkeit des
4/15 Verbrennungsgemisches, hat es sich überraschenderweise sowohl bei dem erfindungsgemäßen Alkanol- als auch bei dem Diesel-Alkanolmotor als optimal erwiesen, wenn etwa 5 bis 40%, insbesondere etwa 10 bis 35% und besonders etwa 25% des gesamten, für die Befeuerung der Verbrennungskraftmaschine erforderlichen, Kraftstoffs mittels Ether-Fumigation und der restliche Anteil mittels Direkteinspritzung der motorischen Verbrennung zugeführt wird. Bei der erfindungsgemäßen Verbrennungskraftmaschine wird dies durch eine entsprechende Auslegung der Kraftstoffzuführmittel, des Abgaswärmetauschers und des Katalysators, gegebenenfalls unter Einbeziehung geeigneter Steuer- oder Regelungsvorrichtungen, berücksichtigt.

Eine wichtige Anwendung des erfindungsgemäßen Verfahrens stellt der oben angegebene selbstzündende Alkanolmotor dar, dessen Kraftstoffbedarf insbesondere zu 5 bis 40% über die Gasphase, nämlich über das mit Ethern versetzte Abgas, erfolgt und der insoweit als selbstzündende Alkanol-Verbrennungskraftmaschine mit Ether-Fumigation des rückgeführten Abgases zu bezeichnen ist. Dabei hat es sich als besonders vorteilhaft erwiesen, wenn etwa 10 bis 35% und insbesondere etwa 25% des gesamten Kraftstoffbedarfs, der für die Befeuerung der erfindungsgemäßen Verbrennungskraftmaschine (10) erforderlich ist, über die Gasphase bereitgestellt werden.

Erfindungsgemäß ist durch die Abgasrückführung bei der motorischen Verbrennung eine wesentliche Absenkung der Stickoxidbildung zu erzielen. Eine noch weitergehende Absenkung ist bei Verwendung der angegebenen sauerstoffhaltigen Kraftstoffe durch eine Erhöhung der Wasserdampfkonzentration bzw. des Wasserdampfgehalts im Verbrennungsgas und die damit einhergehende Erhöhung der Wärmekapazität des Verbrennungsgases möglich. Die Wasserdampfkonzentration ist einerseits über das bei der Dehydratisierung nach den obigen Gleichungen 1 bis 3 freigesetzte Wasser steuerbar. Erfindungsgemäß ist es allerdings bevorzugt, zu diesem Zweck ein geeignetes Wasserzuführmittel in Strömungsrichtung zwischen dem Katalysator und der Brennkammer der Verbrennungskraftmaschine vorzusehen, mit dem der Wassereintrag in den Verbrennungsraum über die Verbrennungsluft, das rückgeführte Abgas und/oder den Alkanol-Ether erfolgt. Alternativ oder ergänzend ist der Wassereintrag über den direkt eingespritzten Kraftstoff bevorzugt.

Die erfindungsgemäße Verbrennungskraftmaschine wird zum Zwecke einer Leistungssteigerung mit komprimierter und gekühlter Verbrennungsluft betrieben. Sie umfasst daher in Strömungsrichtung zwischen einem Ladelufteintritt und dem Brennraum einen Abgasturbolader, insbesondere einen Abgasturbolader zur Stauaufladung oder einen
Druckwellenlader zur Stoßaufladung, und einen Verbrennungsluftkühler, zur Abkühlung der komprimierten Verbrennungsluft vor Eintritt in den Brennraum.

Eine effiziente Abgasrückführung und -nutzung, unter Berücksichtigung der jeweiligen Motorleistung und -bauart, wird erfindungsgemäß durch eine einflutige oder mehrflutige, insbesondere zweiflutige, Ausführung des Abgaspfads für das rückgeführte Abgas gewährleistet.

Durch diese bevorzugte Ausgestaltung der Abgasrückleitung, unter Einbeziehung des Abgaswärmetauschers, ist sichergestellt, dass die Alkanol-Kraftstoffdämpfe mit einer Temperatur von > 200°C, insbesondere von etwa 210 bis 240°C und besonders von etwa 220°C dem Katalysator zuführbar sind, wodurch die katalytische Dehydratisierung in vorteilhafter Weise beeinflusst wird.

Bevorzugt weist die erfindungsgemäße Verbrennungskraftmaschine einen wabenförmigen Trägerkatalysator - vorzugsweise aus Metall - auf, der mit Titandioxid oder Mischungen von Titandioxid, Siliziumdioxid und/oder Aluminiumoxid oder Eisenzeolithen als Aktivkomponenten für die katalytischen Reaktionen beschichtet ist. Katalysatoren dieser Art werden bisher erfolgreich als Hydrolysekatalysatoren für Harnstoff zur On-board-Erzeugung von Ammoniak nach der SCR-Technik eingesetzt.

Der wabenförmige Metallträgerkatalysator ist bevorzugt aus einer Metallfolie einer Dicke von etwa 20 bis 50 pm, insbesondere von etwa 25 bis 40 pm und besonders von etwa 30 pm, gefertigt. Er ist möglichst feinzeilig, mit einer Zelldichte von etwa 400 bis 800 cpsi, insbesondere etwa 500 bis 800 cpsi und besonders etwa 600 cpsi. Die Aktivkomponente für die katalytischen Reaktionen ist als Washcoat-Beschichtung mit einer geringen Auftragskonzentration von etwa 5 bis 100 g Metalloxid/I, insbesondere etwa 10 bis 40 g Metalloxid/I und besonders etwa 20 g Metalloxid/I, auf dem wabenförmigen Trägerkatalysator, der vorzugsweise als Metallträgerkatalysator ausgebildet ist, aufgebracht, um die Limitierung der Konvertierungsgeschwindigkeit von Alkanol in Alkylether durch Porendiffusion zu vermindern. Bevorzugt weist der Katalysator einen Durchmesser von etwa 20 bis 100 mm, insbesondere von etwa 40 bis 80 mm und besonders von etwa 60 mm, und eine Länge von etwa 50 bis 400 mm, insbesondere von etwa 100 bis 300 mm und besonders von etwa 200 mm, auf.

Titandioxid als Aktivkomponente ist bei katalytischen Reaktionen, an denen Wasser beteiligt ist, anderen Oxiden in seiner Aktivität überlegen. Zudem ist Titanoxid resistent gegen Sulfatisierung und kann damit auch bei geringen Schwefelgehalten der Kraftstoffe eingesetzt werden. Demgegenüber sind y-AI203und andere in der Literatur beschriebene
5/15 Stoffe zur Beschichtung des Trägerkatalysators nur zusammen mit absolut schwefelfreien Abgasen verwendbar. So reicht etwa bereits ein Schwefelgehalt eines Kraftstoffs von < 10 ppm aus, um einen Y-AI203-Kataiysator in relativ kurzer Zeit zu deaktivieren.

Es ist weiterhin bevorzugt, dass der Abgaswärmetauscher zum Zwecke einer gesteuerten Rückleitung des gekühlten Abgases in den Brennraum je Auslass ein Druckspitzenventil aufweist.

Vorzugsweise ist außerdem in dem oder jedem Abgasrückführpfad ein Abgasrückführventil vorgesehen, mittels dessen bei jeweils geeigneter Leitungsführung das mit dem Ether vermischte Abgas gesteuert der Verbrennungsluft, das Abgas gesteuert dem Ether vor der Vermischung mit der Verbrennungsluft oder das Abgas gesteuert dem bereits mit der Verbrennungsluft vermischten Ether zuführbar ist.

Die Verbrennungskraftmaschine kann Leitungsmittel und wenigstens ein Abgasrückführventil aufweisen, wobei diese Merkmale in einer Weise ausgebildet und miteinander verbunden sind, dass das in dem Abgaswärmetauscher gekühlte Abgas und der in dem Katalysator gebildete Ether durch das oder jedes Abgasrückführventil steuerbar der komprimierten und gekühlten Verbrennungsluft zumischbar sind.

Insbesondere ist erfindungsgemäß vorgesehen, dass die Leitungsmittel und das wenigstens eine Abgas rückführventil in einer Weise ausgebildet und miteinander verbunden sind, dass das in dem Abgaswärmetauscher gekühlte Abgas gesteuert erst dem in dem Katalysator gebildeten Ether zudosierbar ist und dann das derart gebildete Abgas-Ethergemisch mit der komprimierten und gekühlten Verbrennungsluft vermischbar ist.

Nach einer nicht-beanspruchten Zuführungsalternative sind die Leitungsmittel und das wenigstens eine Abgasrückführventil in einer Weise ausgebildet und miteinander verbunden, dass das in dem Abgaswärmetauscher gekühlte Abgas gesteuert und der in dem Katalysator gebildete Ether direkt zu der komprimierten und gekühlten Verbrennungsluft zumischbar sind.

Nach einer weiteren nicht-beanspruchten Zuführungsalternative schließlich sind die Leitungsmittel und das wenigstens eine Abgasrückführventil in einer Weise ausgebildet und miteinander verbunden, dass das in dem Abgaswärmetauscher gekühlte Abgas gesteuert der komprimierten und gekühlten Verbrennungsluft und der in dem Katalysator gebildete Ether direkt der komprimierten und ungekühlten Verbrennungsluft zumischbar sind.

Bei dieser Zuführungsalternative ist der Katalysator über geeignete Leitungsmittel mit der Verbrennungsluftleitung zwischen dem Abgasturbolader und der Verbrennungsluftkühlung verbunden, wodurch zunächst die Vermischung des Ethers mit der komprimierten Verbrennungsluft und anschließend, mittels der in der Verbrennungsluftleitung angeordneten Verbrennungsluftkühlung, die Kühlung des Ether-Verbrennungsluftgemisches ermöglicht wird. Die gesteuerte Zudosierung des gekühlten Abgases erfolgt bei allen Zuführungsalternativen mittels des wenigstens einen Abgasrückführventils über wenigstens eine Leitung zwischen dem Abgasrückführventil und der Verbrennungsluftleitung im Bereich zwischen der Verbrennungsluftkühlung und dem Ansaugtrakt des Motors.

Das gemäß diesen Ausführungs- bzw. Zuführungsalternativen erzeugte und mit gekühltem Abgas angereicherte Ether-Verbrennungsluftgemisch wird in den Brennraum eingeleitet und bildet, zusammen mit dem direkt in den Brennraum eingespritzten Kraftstoff, das zum Betrieb der erfindungsgemäßen Verbrennungskraftmaschine erforderliche Verbrennungsgemisch.

Zur Abgasbehandlung weist die erfindungsgemäße Verbrennungskraftmaschine nach einer vorteilhaften Ausführungsvariante im Abgaspfad einen Oxidationskatalysator mit Platin und/oder Palladium als Aktivkomponente/n auf, um die Emission von Kohlenmonoxid und Alkanen, insbesondere aber die von Aldehyden (Formaldehyd, Acetaldehyd und höhere Aldehyde), wirksam zu unterbinden.

Bevorzugte Ausführungsformen der erfindungsgemäßen Verbrennungskraftmaschine mit Ether-Fumigation der Verbrennungsluft für Fahrzeuge sind in den beiaefüaten Füg. 1 bis Füg. 4 wiederaegeben:
Fia 1 zeigt eine Ausführungsform der erfindungsgemäßen Verbrennungskraftmaschine in schematischer Darstellung als Sechszylinder-Nutzfahrzeugmotor mit Ether-Fumigation und zweiflutiger Abgasrückführung, unter Angabe der Strömungsverläufe für Kraftstoff, Abgas und Verbrennungsluft;
Fla. 2 zeigt die Ausführungsform der erfindungsgemäßen Verbrennungskraftmaschine gemäß Füg. 1 mit einer ersten alternativen Ethereinleitung;
Fia 3 zeigt die Ausführungsform der erfindungsgemäßen Verbrennungskraftmaschine gemäß Fia. 1 mit einer zweiten alternativen Ethereinleitung;
Fia 4 zeigt die Ausführungsform der erfindungsgemäßen Verbrennungskraftmaschine gemäß Fia. 1 mit einer dritten alternativen Ethereinleitung. In Fia. 1 ist des erfindungsgemäße Gesamtsystem in einer Ausführungsform mit einem Sechszylinder-Nutzfahrzeugmotor (10) mit Abgasturbolader (11) und zweiflutiger Abgasrückführung dargestellt, wie er beispielsweise von der Anmelderin unter der Bezeichnung Motor D 2066 erhältlich ist.

Zur Bereitstellung eines Alkanol-Kraftstoffs ist ein Kraftstofftank (1) vorgesehen, der über eine erste Leitung (18), eine Kraftstoffpumpe (2) und ein Einspritzventil (3) mit einem ersten Einlass eines Abgaswärmetauschers (4) verbunden ist. Zwischen dem ersten Einlass und einem ersten Auslass ist in dem Abgaswärmetauscher (4) ein erster Bereich zum Verdampfen des Alkanol-Kraftstoffs unter Aufnahme von Wärmeenergie ausgebildet. Zur Bereitstellung der erforderlichen Wärmeenergie weist der Abgaswärmetauscher (4) zwischen einem zweiten Einlass und einem zweiten Auslass einen zweiten Bereich und zwischen einem dritten Einlass und einem dritten Auslass einen dritten Bereich auf, wobei der zweite und dritte Einlass jeweils unmittelbar über eine zweite und dritte Leitung (19, 20) mit dem Abgasauslass (8) des Motors (10) verbunden sind. Durch eine entsprechende konstruktive Gestaltung der drei Bereiche des Abgaswärmetauschers (4) ist ein optimaler Wärmeübergang vom zweiten und dritten Bereich auf den ersten Bereich gewährleistet, so dass am ersten Ausgang des Abgaswärmetauschers (4) der verdampfte Alkanol-Kraftstoff mit einer Temperatur > 200°C und am zweiten und dritten Ausgang jeweils das gekühlte Abgas zur Weiterleitung bereitzustellen sind.

Zur Weiterleitung des gekühlten Abgases von diesem zweiflutigen Abgaswärmetauscher (4) sind der zweite und dritte Auslass über jeweils ein Druckspitzenventil (6) mit einer gemeinsamen vierten Leitung (21) verbunden, die an ein AGR-Ventil (7) angeschlossen ist. Mittels einer fünften Leitung (22) ist das AGR-Ventil (7) direkt mit dem Ansaugtrakt (9) des Motors (10) verbunden. Für die Weiterleitung des verdampften Alkanol-Kraftstoffs von dem ersten Auslass des Abgaswärmetauschers (4) ist eine sechste Leitung (23) vorgesehen, die mit dem Einlass eines Katalysators (5) verbunden ist. Der Katalysator (5) weist als aktive Komponente Titandioxid zur Dehydratisierung der bei einer Temperatur von > 200°C aus dem Wärmetauscher (4) austretenden Alkanol-Kraftstoffdämpfe zu Dialkylether, gemäß der vorstehenden Gleichung 1 oder 2, auf. Der Auslass des Katalysators (5) ist über eine siebte Leitung (24) mit der vierten Leitung (21 ) verbunden, zur Ether-Fumigation des aus dem Abgaswärmetauscher (4) austretenden gekühlten Abgases und zur anschließenden Einleitung des dabei entstehenden Ether-Abgasgemisches in den Motor (10). Die für die Befeuerung der sechs angedeuteten Brennkammern bzw. Zylinder des Motors (10) erforderliche Kraftstoffzufuhr mit zugehörigem Direkteinspritzsystem ist in der für Selbstzündungsmotoren üblichen Weise ausgeführt und insoweit nicht zeichnerisch hervorgehoben.

Der Verbrennungsluftpfad umfasst in Strömungsrichtung einen Ladelufteintritt (12), einen Luftfilter (14), eine Verbrennungsluftleitung (15) mit dem Verdichterrad eines Abgasturboladers (11) und mit einer Verbrennungsluftkühlung (17) sowie den Ansaugtrakt (9) des Motors (10). Der Abgaspfad umfasst in Strömungsrichtung den Abgasauslass (8) des Motors (10), das Turbinenrad des Abgasturboladers (11), eine Auspuffleitung (16) und einen Abgasaustritt (13).

Die in Fia. 2 dargestellte Ausführungsform der erfindungsgemäßen Verbrennungskraftmaschine weist alternativ zur siebten Leitung (24) eine achte Leitung (25) auf, die den Auslass des Katalysators (5) mit der fünften Leitung (22) unter Umgehung des AGR-Ventils (7) verbindet. Somit umfasst auch diese Ausführungsform der erfindungsgemäßen Verbrennungskraftmaschine - entsprechend der in Fia. 1 dargestellten - eine Ether-Fumigation des rückgeführten Abgases.

Fm. 3 ist eine Darstellung der erfindungsgemäßen Verbrennungskraftmaschine mit einer weiteren alternativen Ethereinleitung unter Umgehung des AGR-Ventils (7), wobei der Auslass des Katalysators (5) über eine neunte Leitung (26), welche die siebte Leitung (24) in Fia. 1 ersetzt, direkt mit der Verbrennungsluftleitung (15) zwischen der Verbrennungsluftkühlung (17) und dem Ansaugtrakt (9) des Motors (10) verbunden ist und insoweit direkt der komprimierten und gekühlten Verbrennungsluft zumischbar ist.

Eine letzte alternative Ethereinleitung bei der erfindungsgemäßen Verbrennungskraftmaschine gemäß Fia. 1 ist in Fia. 4 abgebildet. Hierbei ist der Auslass des Katalysators (5) über eine zehnte Leitung (27), welche wiederum die siebte Leitung (24) in Fia. 1 ersetzt, direkt mit der Verbrennungsluftleitung (15) vor der Verbrennungsluftkühlung (17) verbunden, wodurch eine Mischung des verdampften Alkanol-Kraftstoffs mit der komprimierten Verbrennungsluft und eine Abkühlung dieses Gemisches vor der Zudosierung des gekühlten Abgases ermöglicht wird.

Es ist weiterhin die Aufgabe der vorliegenden Erfindung, ein Verfahren zur Ether-Fumigation der Verbrennungsluft in einer selbstzündenden Verbrennungskraftmaschine für Fahrzeuge anzugeben, welches die im Einzelnen oben angeführten Nachteile des Standes der Technik überwindet und insbesondere unter Verwendung der oben beschriebenen Verbrennungskraftmaschine anwendbar ist.

Diese Aufgabe der Erfindung wird durch ein Verfahren gelöst, das erfindungsgemäß zur Verwendung einer selbstzündenden Verbrennungskraftmaschine mit Ether-Fumigation der Verbrennungsluft für Fahrzeuge gemäß Anspruch 1 geeignet ist und die Verfahrensschritte aufweist:
(a) Bereitstellen eines Alkanol-Kraftstoffs an Bord eines Fahrzeugs; (b) Verdampfen des Alkanol-Kraftstoffs; (c) Dehydratisierung des verdampften Alkanol-Kraftstoffs zu Ether und Wasserdampf in einem Katalysator; (d) Ether-Fumigation der Verbrennungsluft; (e) Bereitstellung des Verbrennungsgemisches im Brennraum der Verbrennungskraftmaschine durch Vermischen eines direkt eingespritzten Kraftstoffs mit dem Ether-Verbrennungsluft-Gemisch; (f) Befeuerung der Verbrennungskraftmaschine durch Verbrennen des Verbrennungsgemisches im Brennraum; und das dadurch gekennzeichnet, dass in Verfahrensschritt (a) der Alkanol-Kraftstoff mit einem Zuführmittel bereitgestellt wird, dass in Verfahrensschritt (b) der bereitgestellte Alkanol-Kraftstoff in einem Abgaswärmetauscher verdampft wird, wobei ein Teil des bei der Befeuerung der Verbrennungskraftmaschine entstandenen Abgases zur Abkühlung dem Abgaswärmetauscher zugeführt wird und der Alkanol-Kraftstoff unter Aufnahme der bei der Abkühlung des Abgases abgeführten Wärmeenergie verdampft wird, dass in den Verfahrensschritten (c) bis
(e) ein Teil des für die Befeuerung der Verbrennungskraftmaschine erforderlichen Kraftstoffs mittels der Ether-Fumigation der Verbrennungsluft unter Beimischung des in dem Abgaswärmetauscher gekühlten Abgases dem Brennraum der Verbrennungskraftmaschine zugeführt wird, und dass in Verfahrensschritt
(f) die Befeuerung der Verbrennungskraftmaschine durch Verbrennen des mit dem gekühlten, rückgeführten Abgas versetzten Verbrennungsgemisches erfolgt.

Das erfindungsgemäße Verfahren ermöglicht insbesondere einen kostengünstigen und weitestgehend emissionsarmen Motorbetrieb mit Alkanol-Kraftstoffen oder mit Alkanol-Kraftstoffen und schwefelarmen, mineralölbasierten Diesel-Kraftstoffen.

Vorteilhafte Ausführungen des erfindungsgemäßen Verfahrens stellen die Gegenstände der abhängigen Ansprüche 10 bis 13 dar. Einzelheiten zu diesen vorteilhaften Ausführungsformen und zu weiteren Vorteilen des Verfahrens ergeben sich unmittelbar aus den obigen Erläuterungen im Zusammenhang mit der erfindungsgemäßen Verbrennungskraftmaschine nach Anspruch 1 sowie im Zusammenhang mit den korrespondierenden vorteilhaften Weiterbildungen der erfindungsgemäßen Verbrennungskraftmaschine nach den Ansprüchen 2 bis 8.

### Bezugszeichenliste

- 1: Kraftstofftank
- 2: Kraftstoffförderpumpe
- 3: Einspritzventil
- 4: Abgaswärmetauscher
- 5: Katalysator
- 6: Druckspitzenventil
- 7: Abgasrückführventil/AGR-Ventil
- 8: Abgasauslass
- 9: Ansaugtrakt
- 10: Motor
- 11: Abgasturbolader
- 12: Ladelufteintritt
- 13: Abgasaustritt
- 14: Luftfilter
- 15: Verbrennungsluftleitung
- 16: Auspuffleitung
- 17: Verbrennungsluftkühlung
- 18: erste Leitung (Verbrennungsluftkühlung)
- 19: zweite Leitung (Abgasleitung)
- 20: dritte Leitung (Abgasleitung)
- 21: vierte Leitung (Abgasleitung)
- 22: fünfte Leitung (Abgasleitung bzw., Abgas-Etherleitung)
- 23: sechste Leitung (Abgasleitung)
- 24: siebte Leitung (Etherleitung)
- 25: achte Leitung (Etherleitung) / erste Alternative zu 24
- 26: neunte Leitung (Etherleitung) / zweite Alternative zu 24
- 27: zehnte Leitung (Etherleitung) / dritte Alternative zu 24

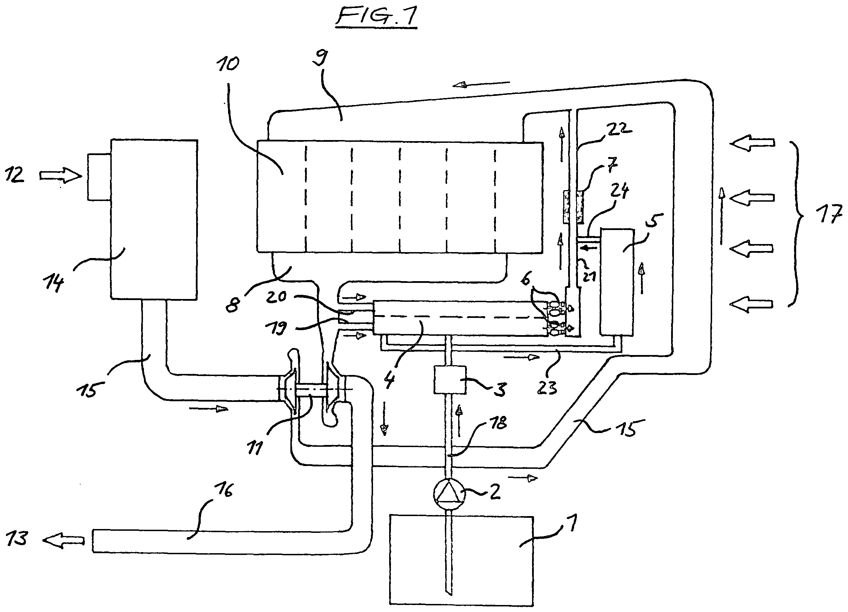

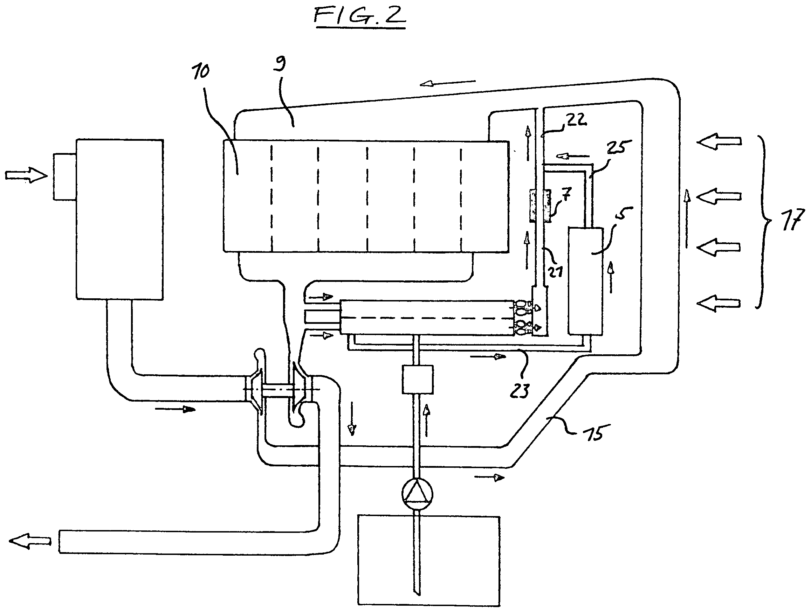

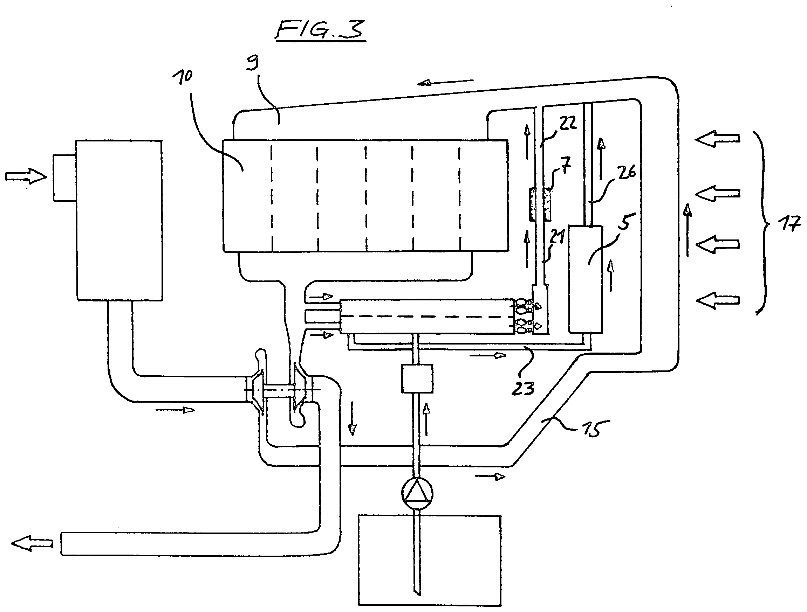

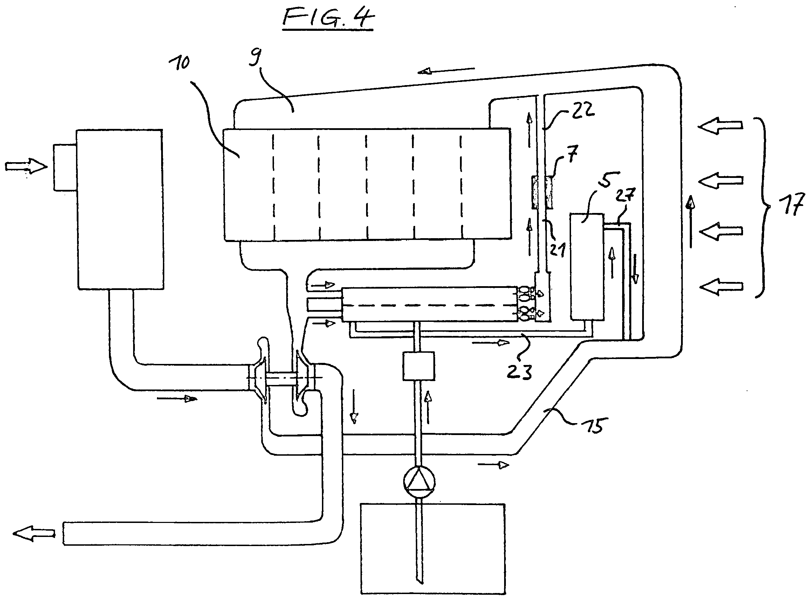

## Patentansprüche

1. Selbstzündende Verbrennungskraftmaschine (10) mit Ether-Fumigation der Verbrennungsluft für Fahrzeuge, wobei zur Ether-Fumigation
- Zuführmittel (1, 2, 3) für einen Alkanol-Kraftstoff,
- Ein in einer Abgasrückleitung angeordneter Abgaswärmetauscher (4), zur Abkühlung eines Teils des bei der Befeuerung der Verbrennungskraftmaschine (10) entstehenden Abgases und zur Verdampfung des zugeführten Alkanol-Kraftstoffs unter Aufnahme der bei der Abkühlung des Abgases abzuführenden Wärmeenergie, und
- ein Katalysator (5), zur Dehydratisierung des verdampften Alkanol-Kraftstoffs zu Ether,
vorgesehen sind, wobei
die Zuführmittel (1, 2, 3), der Abgaswärmetauscher (4) und der Katalysator (5) in einer Weise ausgebildet und mit dem Brennraum der Verbrennungskraftmaschine (10) verbunden sind, dass ein Teil des für die Befeuerung der Verbrennungskraftmaschine (10) erforderlichen Kraftstoffs mittels der Ether-Fumigation der Verbrennungsluft, unter Beimischung des in dem Abgaswärmetauscher (4) gekühlten und rückgeführten Abgases, dem Brennraum der Verbrennungskraftmaschine (10) zuführbar ist, und wobei
Leitungsmittel (21) vorgesehen sind, die wenigstens ein Abgasrückführventil (7) umfassen und so ausgebildet und angeordnet sind, dass das in dem Abgaswärmetauscher (4) gekühlte Abgas durch die Leitungsmittel (21) gesteuert zu dem in dem Katalysator (5) gebildeten Ether zumischbar ist und dieses Abgas-Ethergemisch durch weitere Leitungsmittel (22) mit der komprimierten und gekühlten Verbrennungsluft vermischbar ist.

2. Verbrennungskraftmaschine gemäß Anspruch 1,
**dadurch gekennzeichnet, dass**
die Zuführmittel zur Ether-Fumigation zum Einspritzen des Alkanol-Kraftstoffs in den Abgaswärmetauscher (4) vorgesehen sind und, dass für die Bereitstellung des anderen Teils des zur Befeuerung der Verbrennungskraftmaschine (10) erforderlichen Kraftstoffs, Zuführmittel zur Direkteinspritzung des Kraftstoffs in den Brennraum der Verbrennungskraftmaschine (10) für die Zuführung des Alkanol-Kraftstoffs oder alternativ eines Diesel-Kraftstoffs vorgesehen sind, wobei die Zuführmittel zur Ether-Fumigation und zur Direkteinspritzung in Strömungsrichtung wenigstens einen Kraftstofftank
(1) jeweils wenigstens eine Kraftstoffförderpumpe
(2) und jeweils wenigstens ein Einspritzventil (3) umfassen.

3. Verbrennungskraftmaschine gemäß Anspruch 1 oder 2,
**dadurch gekennzeichnet, dass**
der Alkanol-Kraftstoff ein einwertiger Alkanol-Kraftstoff, insbesondere Methanol, Ethanol, n-Propanol, i-Propanol oder n-Butanol, oder ein zweiwertiger Alkanol-Kraftstoff, insbesondere 1 ,2-Ethandiol, ist und, dass der andere Teil des für die Befeuerung der Verbrennungskraftmaschine (10) erforderlichen Kraftstoffs ein Diesel-Kraftstoff, insbesondere ein schwefelarmer, mineralölbasierter Diesel-Kraftstoff, ist.

4. Verbrennungskraftmaschine gemäß mindestens einem der Ansprüche 1 bis 3,
**dadurch gekennzeichnet, dass**
die Zuführmittel (1, 2, 3) für den Alkanol-Kraftstoff, der Abgaswärmetauscher (4) und der Katalysator (5) in einer Weise ausgebildet sind, dass der Teil des mittels der Ether-Fumigation der Verbrennungsluft zugeführte Kraftstoff auf etwa 5 bis 40%, insbesondere auf etwa 10 bis 35% und besonders auf etwa 25% des gesamten für die Befeuerung der Verbrennungskraftmaschine (10) erforderlichen Kraftstoffs einstellbar ist.

5. Verbrennungskraftmaschine gemäß mindestens einem der Ansprüche 1 bis 4,
**dadurch gekennzeichnet, dass**
in Strömungsrichtung zwischen dem Katalysator (5) und der Brennkammer der Verbrennungskraftmaschine (10) ein Wasserzuführmittel zur Erhöhung des Wasserdampfgehalts der Verbrennungsluft vorgesehen ist.

6. Verbrennungskraftmaschine gemäß mindestens einem der Ansprüche 1 bis 5,
**dadurch gekennzeichnet, dass**
ein Abgasturbolader (11), zur Komprimierung der Verbrennungsluft, und ein Verbrennungsluftkühler (17), zur Abkühlung der komprimierten Verbrennungsluft, in Strömungsrichtung zwischen einem Ladelufteintritt (12) und dem Brennraum der Verbrennungskraftmaschine (10) vorgesehen sind.

7. Verbrennungskraftmaschine gemäß mindestens einem der Ansprüche 1 bis 6,
**dadurch gekennzeichnet, dass**
der Katalysator (5) als Aktivkomponente für katalytische Reaktionen Titandioxid oder Mischungen von Titandioxid mit Siliziumdioxid und/oder Aluminiumoxid oder Eisenzeolithen aufweist.

8. Verbrennungskraftmaschine gemäß Anspruch 7,
**dadurch gekennzeichnet, dass**
die Aktivkomponente für katalytische Reaktionen als Washcoat-Beschichtung mit einer Auftragskonzentration von etwa 5 bis 100 g Metalloxid/I, insbesondere etwa 10 bis 40 g Metalloxid/I und besonders etwa 20 g Metalloxid/I, auf dem Katalysator (5) ausgebildet ist, wobei der Katalysator (5) in Form eines Trägerkatalysators, insbesondere eines wabenförmigen Metallträgerkatalysators, vorgesehen ist.

9. Verfahren zur Ether-Fumigation der Verbrennungsluft in einer selbstzündenden Verbrennungskraftmaschine für Fahrzeuge gemäß einem der Ansprüche 1 bis 8 aufweisend die Verfahrensschritte:
(a) Bereitstellen eines Alkanol-Kraftstoffs an Bord eines Fahrzeugs;
(b) Verdampfen des Alkanol-Kraftstoffs;
(c) Dehydratisierung des verdampften Alkanol-Kraftstoffs zu Ether und Wasserdampf in einem Katalysator;
(d) Ether-Fumigation der Verbrennungsluft;
(e) Bereitstellung des Verbrennungsgemisches im Brennraum der Verbrennungskraftmaschine durch Vermischen eines direkt eingespritzten Kraftstoffs mit dem Ether-Verbrennungsluft-Gemisch;
(f) Befeuerung der Verbrennungskraftmaschine durch Verbrennen des Verbrennungsgemisches im Brennraum,
**dadurch gekennzeichnet, dass**
in Verfahrensschritt (a) der Alkanol-Kraftstoff mit einem Zuführmittel (1, 2, 3) bereitgestellt wird,
dass in Verfahrensschritt (b) der bereitgestellte Alkanol-Kraftstoff in einem in einer Abgasrückleitung angeordneten Abgaswärmetauscher (4) verdampft wird, wobei ein Teil des bei der Befeuerung der Verbrennungskraftmaschine (10) entstandenen Abgases zur Abkühlung dem Abgaswärmetauscher (4) zugeführt wird und der Alkanol-Kraftstoff unter Aufnahme der bei der Abkühlung des Abgases abgeführten Wärmeenergie verdampft wird,
dass in den Verfahrensschritten (c) bis (e) ein Teil des für die Befeuerung der Verbrennungskraftmaschine (10) erforderlichen Kraftstoffs mittels der Ether-Fumigation der Verbrennungsluft unter Beimischung des in dem Abgaswärmetauscher (4) gekühlten Abgases dem Brennraum der Verbrennungskraftmaschine (10) zugeführt wird, wobei das in dem Abgaswärmetauscher (4) gekühlte Abgas durch Leitungsmittel (21) mittels eines in den Leitungsmitteln angeordneten Abgasrückführventils (7) gesteuert zu dem in dem Katalysator (5) gebildeten Ether gemischt wird und dieses Abgas-Ethergemisch durch weitere Leitungsmittel (22) mit der komprimierten und gekühlten Verbrennungsluft vermischt wird, und dass in Verfahrensschritt (f) die Befeuerung der Verbrennungskraftmaschine durch Verbrennen des mit dem gekühlten, rückgeführten Abgas versetzten Verbrennungsgemisches erfolgt.

10. Verfahren nach Anspruch 9,
**dadurch gekennzeichnet, dass**
als Alkanol-Kraftstoff ein einwertiges Alkanol, insbesondere Methanol, Ethanol, n-Propanol, i-Propanol oder n-Butanol, oder ein zweiwertigen Alkanol, insbesondere 1 ,2-Ethandiol, verwendet wird, wobei der Alkanol-Kraftstoff zur Ether-Fumigation und zur Direkteinspritzung eingesetzt wird oder wobei alternativ zur Ether-Fumigation der Alkanol-Kraftstoff und zur Direkteinspritzung ein Diesel-Kraftstoff, insbesondere ein schwefelarmer, mineralölbasierter Diesel-Kraftstoff, verwendet werden.

11. Verfahren nach Anspruch 9 oder 10,
**dadurch gekennzeichnet, dass**
etwa 5 bis 40%, insbesondere etwa 10 bis 35% und besonders etwa 25% des gesamten, für die Befeuerung der Verbrennungskraftmaschine (10) zugeführten Kraftstoffs als Alkanol-Kraftstoff mittels der Ether-Fumigation der Verbrennungsluft zugeführt werden.

12. Verfahren nach mindestens einem der Ansprüche 9 bis 11,
**dadurch gekennzeichnet, dass**
die Alkanol-Kraftstoffdämpfe in dem Abgaswärmetauscher (4) auf eine Temperatur von > 200°C, insbesondere von etwa 210 bis 240°C und besonders von etwa 220°C, erhitzt werden.

13. Verfahren nach mindestens einem der Ansprüche 9 bis 12,
**dadurch gekennzeichnet, dass**
dem Ether-Verbrennungsluft-Gemisch Wasser zugeführt wird, zur weitergehenden Reduzierung der Schadstoffemission beim Verbrennen des Verbrennungsgemisches.

## Claims

1. A self-igniting internal combustion engine (10) with ether fumigation of the combustion air for vehicles, wherein for ether fumigation
- feed means (1, 2, 3) for an alkanol fuel,
- an exhaust gas heat exchanger (4), arranged in an exhaust gas recirculation line, for cooling a portion of the exhaust gas arising during the firing of the internal combustion engine (10) and for evaporating the alkanol fuel fed while absorbing the thermal energy to be dissipated during the cooling of the exhaust gas, and
- a catalyst (5) for dehydrating the evaporated alkanol fuel to form ether,
are provided, wherein
the feed means (1, 2, 3), the exhaust gas heat exchanger (4) and the catalyst (5) are configured and connected to the combustion chamber of the internal combustion engine (10) in a manner that a portion of the fuel required for firing the internal combustion engine (10) can be fed by means of the ether fumigation of the combustion air, while mixing in the exhaust gas which is cooled in the exhaust gas heat exchanger (4) and recirculated, to the combustion chamber of the internal combustion engine (10), and wherein
line means (21) are provided which comprise at least one exhaust gas recirculation valve (7) and are configured and arranged in such a way that the exhaust gas cooled in the exhaust gas heat exchanger (4) can be mixed in a controlled manner with the ether formed in the catalyst (5) through the line means (21), and this exhaust gas-ether mixture can be mixed through further line means (22) with the compressed and cooled combustion air.

2. An internal combustion engine according to claim 1,
**characterised in that**
the feed means for ether fumigation are provided for injecting the alkanol fuel into the exhaust gas heat exchanger (4) and, **in that** to provide the other portion of the fuel required for firing the internal combustion engine (10), feed means for direct injection of the fuel into the combustion chamber of the internal combustion engine (10) are provided to feed the alkanol fuel or alternatively a diesel fuel, the feed means for ether fumigation and for direct injection in the flow direction comprising at least one fuel tank
(1) at least one respective fuel delivery pump
(2) and at least one respective injection valve (3).

3. An internal combustion engine according to claim 1 or claim 2,
**characterised in that**
the alkanol fuel is a monovalent alkanol fuel, especially methanol, ethanol, n-propanol, i-propanol or n-butanol, or a divalent alkanol fuel, especially 1,2-ethanediol, and **in that** the other portion of the fuel required for firing the internal combustion engine (10) is a diesel fuel, especially a low-sulphur mineral oil-based diesel fuel.

4. An internal combustion engine according to at least any one of claims 1 to 3,
**characterised in that**
the feed means (1, 2, 3) for the alkanol fuel, the exhaust gas heat exchanger (4) and the catalyst (5) are configured in such a way that the portion of the fuel fed by means of the ether fumigation of the combustion air can be adjusted to about 5 to 40%, especially to about 10 to 35% and especially to about 25% of the total fuel required to fire the internal combustion engine (10).

5. An internal combustion engine according to at least any one of claims 1 to 4,
**characterised in that**
a water feed means is provided in the flow direction between the catalyst (5) and the combustion chamber of the internal combustion engine (10) to increase the water vapour content of the combustion air.

6. An internal combustion engine according to at least any one of claims 1 to 5,
**characterised in that**
an exhaust gas turbo charger (11) is provided to compress the combustion air, and a combustion air cooler (17) is provided for cooling the compressed combustion air, in the flow direction between a charge air inlet (12) and the combustion chamber of the internal combustion engine (10).

7. An internal combustion engine according to at least any one of claims 1 to 6,
**characterised in that**
the catalyst (5), as the active component for catalytic reactions, has titanium dioxide or mixtures of titanium dioxide with silicon dioxide and/or aluminium oxide or iron zeolites.

8. An internal combustion engine according to claim 7,
**characterised in that**
the active component for catalytic reactions is provided as a washcoat coating with an application concentration of about 5 to 100g metal oxide/I, especially about 10 to 40g metal oxide/I and especially about 20g metal oxide/I, on the catalyst (5), wherein the catalyst (5) being provided in the form of a carrier catalyst, especially a honeycomb-like metal carrier catalyst.

9. A method for ether fumigation of the combustion air in a self-igniting internal combustion engine for vehicles according to one of Claims 1 to 8, having the method steps:
(a) providing an alkanol fuel on board a vehicle;
(b) evaporating the alkanol fuel;
(c) dehydrating the evaporated alkanol fuel to form ether and water vapour in a catalyst;
(d) ether fumigation of the combustion air;
(e) providing the combustion mixture in the combustion chamber of the internal combustion engine by mixing a directly injected fuel with the ether-combustion air mixture;
(f) firing the internal combustion engine by combusting the combustion mixture in the combustion chamber,
**characterised in that**
in method step (a) the alkanol fuel is provided by a feed means (1, 2, 3), **in that** in method step (b) the provided alkanol fuel is evaporated in an exhaust gas heat exchanger (4) arranged in an exhaust gas recirculation line, wherein a portion of the exhaust gas arising during the firing of the internal combustion engine (10) is fed for cooling to the exhaust gas heat exchanger (4) and the alkanol fuel being evaporated, while absorbing the thermal energy dissipated during the cooling of the exhaust gas,
**in that** in method steps (c) to (e) a portion of the fuel required for firing the internal combustion engine (10) is fed by means of the ether fumigation of the combustion air, while mixing in the exhaust gas cooled in the exhaust gas heat exchanger (4), to the combustion chamber of the internal combustion engine (10), wherein the exhaust gas cooled in the exhaust gas heat exchanger (4) is mixed in a controlled manner with the ether formed in the catalyst (5) through line means (21) by means of an exhaust gas recirculation valve (7) arranged in the line means, and this exhaust gas-ether mixture is mixed through further line means (22) with the compressed and cooled combustion air,
and **in that** in method step (f) the firing of the internal combustion engine takes place by combustion of the combustion mixture to which the cooled, recirculated exhaust gas has been added.

10. A method according to claim 9,
**characterised in that**
a monovalent alkanol, especially methanol, ethanol, n-propanol, i-propanol or n-butanol, or a divalent alkanol, especially 1,2-ethanediol, is used as the alkanol fuel, wherein the alkanol fuel is used for ether fumigation and for direct injection or wherein, as an alternative, the alkanol fuel is used for ether fumigation and a diesel fuel, especially a low-sulphur, mineral oil-based diesel fuel, is used for direct injection.

11. A method according to claim 9 or claim 10,
**characterised in that**
about 5 to 40%, especially about 10 to 35% and especially about 25% of the total fuel fed for firing the internal combustion engine (10), is fed as an alkanol fuel by means of the ether fumigation of the combustion air.

12. A method according to at least any one of claims 9 to 11,
**characterised in that**
the alkanol fuel vapours in the exhaust gas heat exchanger (4) are heated to a temperature of > 200°C, especially of about 210 to 240°C and especially of about 220°C.

13. A method according to at least any one of claims 9 to 12,
**characterised in that**
water is fed to the ether-combustion air mixture for further reduction of the polluting emissions during combustion of the combustion mixture.

## Revendications

1. Moteur à combustion interne à auto-allumage (10) à fumigation à l'éther de l'air de combustion pour des véhicules, dans lequel
- des moyens d'amenée (1, 2, 3) pour un carburant à l'alcanol,
- un échangeur de chaleur des gaz d'échappement (4) agencé dans une conduite de recirculation des gaz d'échappement et destiné à refroidir une partie des gaz d'échappement produits lors du fonctionnement du moteur à combustion interne (10) et à vaporiser le carburant à l'alcanol amené par absorption de l'énergie thermique à évacuer lors du refroidissement des gaz d'échappement, et
- un catalyseur (5) destiné à opérer une déshydratation du carburant à l'alcanol vaporisé pour donner de l'éther,
sont prévus pour réaliser la fumigation à l'éther,
les moyens d'amenée (1, 2, 3), l'échangeur de chaleur des gaz d'échappement (4) et le catalyseur (5) étant conçus et reliés à la chambre de combustion du moteur à combustion interne (10) de telle manière qu'une partie du carburant nécessaire au fonctionnement du moteur à combustion interne (10) peut être amenée à la chambre à combustion du moteur à combustion interne (10) au moyen de la fumigation à l'éther de l'air de combustion, par ajout des gaz d'échappement recirculés et refroidis dans l'échangeur de chaleur de gaz d'échappement (4), et
des moyens formant conduite (21) étant prévus, qui comportent au moins une vanne de recirculation des gaz d'échappement (7) et qui sont conçus et agencés de telle sorte que les gaz d'échappement refroidis dans l'échangeur de chaleur des gaz d'échappement (4) peuvent être mélangés de manière commandée par les moyens formant conduite (21) à l'éther formé dans le catalyseur (5) et ce mélange de gaz d'échappement et d'éther peut être mélangé par d'autres moyens formant conduite (22) à l'air de combustion comprimé et refroidi.

2. Moteur à combustion interne selon la revendication 1, **caractérisé en ce que** les moyens d'amenée sont prévus pour la fumigation à l'éther pour l'injection du carburant alcanol dans l'échangeur de chaleur des gaz d'échappement (4) et **en ce que**, pour la fourniture de l'autre partie du carburant nécessaire au fonctionnement du moteur à combustion interne (10), des moyens d'amenée pour l'injection directe du carburant dans la chambre de combustion du moteur à combustion interne (10) pour l'amenée du carburant à l'alcanol ou en variante d'un carburant au diesel sont prévus, les moyens d'amenée pour la fumigation à l'éther et pour l'injection directe comportant dans la direction d'écoulement au moins un réservoir de carburant
(1) respectivement au moins une pompe d'alimentation en carburant
(2) et respectivement au moins une soupape d'injection (3).

3. Moteur à combustion interne selon la revendication 1 ou 2, **caractérisé en ce que** le carburant à l'alcanol est un carburant à l'alcanol monovalent, en particulier du méthanol, de l'éthanol, du n-propanol, du i-propanol ou du n-butanol, ou un carburant à l'alcanol bivalent, en particulier de l'éthane-1,2-diol, et **en ce que** l'autre partie du carburant nécessaire au fonctionnement du moteur à combustion interne (10) est un carburant diesel, en particulier un carburant diesel pauvre en soufre, à base d'huile minérale.

4. Moteur à combustion interne selon au moins l'une des revendications 1 à 3, **caractérisé en ce que** les moyens d'amenée (1, 2 3) pour le carburant à l'alcanol, l'échangeur de chaleur des gaz d'échappement (4) et le catalyseur (5) sont conçus de telle manière que la partie du carburant amené à l'air de combustion au moyen de la fumigation à l'éther peut être réglée à environ 5 à 40 %, en particulier à environ 10 à 35 % et en particulier à environ 25 % du carburant total nécessaire au fonctionnement du moteur à combustion interne (10).

5. Moteur à combustion interne selon au moins l'une des revendications 1 à 4, **caractérisé en ce qu'**un moyen d'amenée d'eau destiné à augmenter la teneur en vapeur d'eau de l'air de combustion est prévu dans la direction d'écoulement entre le catalyseur (5) et la chambre de combustion du moteur à combustion interne (10).

6. Moteur à combustion interne selon au moins l'une des revendications 1 à 5, **caractérisé en ce qu'**un turbocompresseur (11), destiné à comprimer l'air de combustion, et un refroidisseur d'air de combustion (17), destiné à refroidir l'air de combustion comprimé, sont prévus dans la direction d'écoulement entre une entrée d'air de suralimentation (12) et la chambre de combustion du moteur à combustion interne (10).

7. Moteur à combustion interne selon au moins l'une des revendications 1 à 6, **caractérisé en ce que** le catalyseur (5) présente comme composant actif pour des réactions catalytiques du dioxyde de titane ou des mélanges de dioxyde de titane et de dioxyde de silicium et/ou d'oxyde d'aluminium ou de zéolithe ferreuse.

8. Moteur à combustion interne selon la revendication 7, **caractérisé en ce que** le composant actif pour des réactions catalytiques est conçu comme un revêtement catalytique présentant une concentration en couche d'environ 5 à 100 g d'oxyde métallique/I, en particulier d'environ 10 à 40 g d'oxyde métallique/I et en particulier d'environ 20 g d'oxyde métallique/I, sur le catalyseur (5), le catalyseur (5) étant prévu sous la forme d'un catalyseur supporté, en particulier d'un catalyseur supporté métallique en nid d'abeille.

9. Procédé de fumigation à l'éther de l'air de combustion dans un moteur à combustion interne à auto-allumage pour des véhicules selon l'une des revendications 1 à 8, comprenant les étapes de procédé :
(a) la fourniture d'un carburant à l'alcanol à bord d'un véhicule ;
(b) la vaporisation du carburant à l'alcanol ;
(c) la déshydratation du carburant à l'alcanol vaporisé pour donner de l'éther et de la vapeur d'eau dans un catalyseur ;
(d) la fumigation à l'éther de l'air de combustion ;
(e) la fourniture du mélange de combustion dans la chambre de combustion du moteur à combustion interne par mélange d'un carburant injecté directement au mélange d'air de combustion et d'éther ;
(f) la mise en fonctionnement du moteur à combustion interne par combustion du mélange de combustion dans la chambre de combustion,
**caractérisé en ce que** :
à l'étape de procédé (a), le carburant à l'alcanol est fourni à l'aide d'un moyen d'amenée (1, 2, 3),
à l'étape b), le carburant à l'alcanol fourni est vaporisé dans un échangeur de chaleur des gaz d'échappement (4) agencé dans une conduite de recirculation des gaz d'échappement, où une partie des gaz d'échappement produits lors du fonctionnement du moteur à combustion interne (10) est amenée à l'échangeur de chaleur des gaz d'échappement (4) pour être refroidis, et le carburant à l'alcanol est vaporisé par absorption de l'énergie thermique évacuée lors du refroidissement des gaz d'échappement,
aux étapes (c) à (e), une partie du carburant nécessaire au fonctionnement du moteur à combustion interne (10) est amenée à la chambre à combustion du moteur à combustion interne (10) au moyen de la fumigation à l'éther de l'air de combustion, par ajout des gaz d'échappement refroidis dans l'échangeur de chaleur des gaz d'échappement (4), où les gaz d'échappement refroidis dans l'échangeur de chaleur des gaz d'échappement (4) sont mélangés de manière commandée par des moyens formant conduite (21) à l'éther formé dans le catalyseur (5) au moyen d'une vanne de recirculation des gaz d'échappement (7) agencée dans les moyens formant conduite et ce mélange de gaz d'échappement et d'éther est mélangé par d'autres moyens formant conduite (22) à l'air de combustion comprimé et refroidi,
et à l'étape (f), la mise en fonctionnement du moteur à combustion interne s'effectue par combustion du mélange de combustion mélangé aux gaz d'échappement amenés recirculés et refroidis.

10. Procédé selon la revendication 9, **caractérisé en ce qu'**un alcanol monovalent, en particulier du méthanol, de l'éthanol, du n-propanol, du i-propanol ou du n-butanol, ou un alcanol bivalent, en particulier de l'éthane-1,2-diol, est utilisé comme carburant à l'alcanol, dans lequel le carburant à l'alcanol est utilisé pour la fumigation à l'éther et pour l'injection directe ou dans lequel en variante le carburant à l'alcanol est utilisé pour la fumigation à l'éther et un carburant diesel, en particulier un carburant diesel pauvre en soufre, à base d'huile minérale, est utilisé pour l'injection directe.

11. Procédé selon la revendication 9 ou 10, **caractérisé en ce qu'**environ 5 à 40 %, en particulier environ 10 à 35 % et en particulier environ 25 % du carburant total amené pour la mise en fonctionnement du moteur à combustion interne (10) sont amenés en tant que carburant à l'alcanol à l'air de combustion au moyen de la fumigation à l'éther.

12. Procédé selon au moins l'une des revendications 9 à 11, **caractérisé en ce que** les vapeurs de carburant à l'alcanol sont chauffées dans l'échangeur de chaleur des gaz d'échappement (4) à une température > 200°C, en particulier d'environ 210 à 240°C et en particulier d'environ 220°C.

13. Procédé selon au moins l'une des revendications 9 à 12, **caractérisé en ce que** de l'eau est amenée au mélange d'éther et d'air de combustion, pour la réduction considérable de l'émission de substance nocive lors de la combustion du mélange de combustion.
